# EUROPEAN PATENT APPLICATION

(11) **EP 4 215 298 A1**
(43) Date of publication of application: **26.07.2023**
(21) Application number: 22152887.0
(22) Date of filing: 24.01.2022
(51) Int. Cl.: B22F 1/05, B22F 5/00, B22F 10/28, B22F 12/00, B33Y 10/00, B33Y 30/00, B33Y 40/20, B33Y 70/00, C21D 6/00, C21D 6/02, C22C 33/02, C22C 38/02, C22C 38/04, C22C 38/06, C22C 38/40, C22C 38/42, C22C 38/44, C22C 38/46

(54) **TOOL STEEL POWDER FOR ADDITIVE MANUFACTURING**

(71) Applicant: EOS GmbH Electro Optical Systems, 82152 Krailling (DE)
(72) Inventor: Seppälä, Antti, 20750 Turku (FI); Malmivirta, Mika, 20740 Turku (FI)
(74) Representative: Meissner Bolte Partnerschaft mbB

(57) **Abstract**

The present invention relates to a steel powder for additive manufacture of three-dimensional objects and in particular for the manufacture hot and cold work tools, wherein the steel combines the properties of carbon hardening and maraging steel. Such steels have been found to be readily processable and provide crack free objects with low distortion. The present invention further relates to methods for the preparation of corresponding steel powders, methods for the manufacture of three-dimensional objects from corresponding steel powders and three-dimensional objects prepared by such methods, and the use of a corresponding steel powder for the preparation of die casting or injection molding tools and for suppressing the formation of cracks in the preparation of three-dimensional objects from steel.

## Description

The present invention relates to a steel powder for additive manufacture of three-dimensional objects and in particular for the manufacture of hot and cold work tools, wherein the steel combines the properties of carbon hardening and maraging steel. The present invention further relates to methods for the preparation of corresponding steel powders, methods for the manufacture of three-dimensional objects from corresponding steel powders and three-dimensional objects prepared by such methods, and the use of a corresponding steel powder for the preparation of die casting or injection molding tools and for suppressing the formation of cracks in the preparation of three-dimensional objects from steel.

### State of the art

Hardening is usually performed when the steel is quenched from the austenitic phase field into a martensitic or bainitic microstructure. One mode of steel hardening involves carbon, which contributes to steel hardening via carbide formation. In low alloy carbon steels iron carbides are generated during tempering. These carbides coarsen at elevated temperatures which reduces the strength of the steel. When steels contain strong carbide forming elements such as molybdenum, vanadium and chromium, the strength can be increased by prolonged tempering at elevated temperatures. This is due to the precipitation of alloyed carbides which precipitate at certain temperatures. Normally these steels reduce their primary hardened strength when tempered at 100°C to 450°. At 450°C to 550°C the alloyed carbides precipitate and increase the strength up to or even higher than the primary hardness, which is called secondary hardening. Such hardening occurs because the alloying elements (such as molybdenum, vanadium and chromium) can diffuse during prolonged annealing to precipitate finely dispersed alloy carbides. The alloy carbides found in secondary hardened steels are thermodynamically more stable than iron carbides and show little tendency to coarsen.

Another mode of steel hardening is intermetallic precipitation. In both carbide precipitation and inter metallic precipitation hardening the hardening relies on changes in solid solubility with temperature, which produces fine particles of an impurity phase impeding the movement of dislocations or defects in a crystal lattice. Since dislocations are often the dominant carriers of plasticity, this serves to harden the material. Precipitation hardening steels may for instance comprise aluminium and nickel, which form an "impurity phase."

A specific type of steel which hardens via intermetallic precipitation is so called maraging steel (from "martensitic" and "aging"). Maraging steels are known for their superior strength and toughness without losing ductility. Ageing here involves an extended heat-treatment process. In maraging steels the principal alloying element is nickel, which is included in the amount of 15 to 25 wt%. Secondary alloying elements, which include cobalt, molybdenum and titanium, are added to produce intermetallic precipitates. Addition of chromium produces stainless grades resistant to corrosion.

Steels comprising both alloy carbides and intermetallic precipitates are rare, but they are known. Those steels are generally not optimized for low segregation or for optimized hardness after tempering. For instance, US 5,393,488 discloses a steel with a duplex hardening mechanism both with intermetallic precipitates and alloy carbides. This steel comprises up to 0.30 wt.-% of C; 10-18 wt.-% of Ni; 1-5 wt.-% of Mo; 0.5-1.3 wt.-% of Al; 1-3 wt.-% of Cr and 8-16 wt.-% of Co.

For this steel, the high content of Co is quite problematic as it is known that cobalt has negative health and environmental effects. In addition, the properties of this steel are not fully satisfactory in terms of strength at high temperature.

A steel to avoid these disadvantages has been described in WO 2017/207651 A1, which discloses a precipitation hardening steel comprising 0.05-0.30 wt.-% of C; 3-9 wt.-% of Ni; 0.5-1 .5 wt.-% of Mo; 1 -3 wt.-% of Al; 2-14 wt.-% of Cr; 0.25-1.5 wt.-% of V; 0-0.03 wt.-% Co; 0-0.5 wt.-% of Mn; and 0-0.3 wt.-% of Si; where the remaining part up to 100 wt.-% is Fe and impurity elements. In this steel, the amounts of Al and Ni are adjusted such that they fulfil the formula Al = (Ni/3) ± 0.5 in wt.-%, where the amount of Al is 1 wt.-% if the formula results in an amount of Al lower than 1 wt.-% and the amount of Al is 3 wt.-% if the formula results in an amount of Al exceeding 3 wt.-%. Despite the low Co content in the steel of WO 2017/207651 A1, good mechanical properties in terms of yield strength could be provided.

Direct Metal Laser Sintering (DMLS) is a laser-based rapid prototyping and tooling process by means of which net shape parts are fabricated in a single process.

Complex parts can be produced directly from 3D-CAD models by layer-wise solidification of metal powder layers in portions of the layer corresponding to the cross-section of the three-dimensional part in the respective layer. This process is described in detail for example in Juha Kotila et al., Steel-based Metal Powder Blend for Direct Metal Laser Sintering Process, Advances in Powder Metallurgy & Particular Materials - 1999, Vol.2 Part 5, p. 87-93 and in T. Syvanen et al., New Innovations in Direct Metal Laser Sintering Process - A Step Forward in Rapid Prototyping and Manufacturing, Laser Materials Processing, Vol. 87, 1999, p. 68 to 76. As the production of three-dimensional objects does not involve a separate casing and shaping, the process avoids excessive waste e.g. when a cast steel body is machined to a desired form.

A method for producing three-dimensional objects by selective laser sintering or selective laser melting and an apparatus for carrying out this method is disclosed, for example, in EP 1 762 122 A1.

The advantages of additive manufacturing processes have resulted in a great demand for the processing of metal materials by additive manufacturing processes such as Direct Metal Laser Sintering, so that rapid manufacturing can be applied to applications where a specific material having well-known properties is required.

A problem which is often observed with steels for the production of conventional hot working tools, is cracking when the tools are prepared via additive manufacturing processes such as DMLS. Cracking often results from stresses occurring when the material is heated above the melting temperature und subsequently cooled to a much lower temperature in a very short period of time. Due to the higher amounts of material to be cooled in an object, which is prepared by casting, this problem is regularly not observed in the preparation of objects by casting.

An example of a conventional hot working tool steel which is frequently used in die-casting is H13 steel. This steel is alloyed with carbon, silicon, chromium, molybdenum and vanadium and has a comparatively high carbon content (about 0.40%), which is higher than that of most metal materials used in additive manufacturing to date. This high carbon content, unfortunately, has the downside that it or its compounds cause cracking in parts built by a DMLS process.

To overcome this problem, WO 2020/224760 A1 suggests a separate "reinforcement particle powder", which is mostly constituted of a ceramic material.

Yet, there remains a need for steel powders, which are suitable for the processing via additive manufacturing techniques, which are directly processable (i.e. without the necessity to add a reinforcement material) and which preferably provide a high temper resistance, i.e. they are resistive towards loss in hardness when exposed to elevated temperatures. Furthermore, there is a need for a steel powder, which is processable via additive manufacturing with low distortion.

The present application addressed these needs.

### Description of the invention

In the investigation underlying the present invention, it has unexpectedly been discovered that a steel powder having a composition comprising 0.05 to 0.30 wt.-% of C; 3 to 9 wt.-% of Ni; 0.5 to 1.5 wt.-% of Mo; 1 to 3 wt.-% of Al; 2 to 14 wt.-% of Cr; 0.10 to 1.0 wt.-% of V; up to 0.03 wt.-% of Co; up to 0.5 wt.-% of Mn; up to 0.3 wt.-% of Si and up to 0.20 wt.-% of Cu; the remainder up to 100 % being Fe and impurity elements meets the above indicated needs. Such powder, if prepared with an average particle size ranging from 10 to 100 µm, is highly suitable for processing via additive manufacture and provides crack-free three-dimensional objects with low distortion.

Accordingly, in a first aspect, the present application concerns a steel powder, which has a composition comprising 0.05 to 0.30 wt.-% of C; 3 to 9 wt.-% of Ni; 0.5 to 1.5 wt.-% of Mo; 1 to 3 wt.-% of Al; 2 to 14 wt.-% of Cr; 0.10 to 1.0 wt.-% of V; up to 0.03 wt.-% of Co; up to 0.5 wt.-% of Mn; up to 0.3 wt.-% of Si and up to 0.20 wt.-% of Cu; the remainder up to 100 % being Fe and impurity elements, wherein the powder has an average particle size ranging from 10 to 100 µm.

For the purposes of this invention, the average particle size is a weight based average particle size d50 as determined by laser diffraction according to ISO 13320, wherein the d50 designates the weight where the amount of the particles by weight, which have a smaller particle diameter than the indicated size, is 50% of the mass of the sample.

Regarding the amounts given in this application, it is noted that the given ranges are meant to cover any amounts having the same round-off above the range as well as below that range.

In the above steel, the impurities are any constituents of the steel composition, which are present in an amount of 0.05 wt.-% or less, and thus have no relevant impact on the mechanical characteristics of the steel. This includes metal impurity constituents as well as non-metal impurity constituents such a nitrogen (N), oxygen (O), sulfur (S) or phosphorous (P). In the inventive steel powder, the content of oxygen is preferably 0.05 wt.-% or less, more preferably 0.035 wt.-% or less, and the content of sulfur is preferably 0.03 wt.-% or less and more preferably 0.01 wt.-% or less. Contents of N and P are preferably less than 0.01 wt.-%, respectively.

For three-dimensional objects, which are prepared from the steel powder, it has been found to be beneficial if the content of vanadium therein is limited to the low portion of the range of 0.1 to 1.0 wt.-% as indicated above. Thus, it is preferred in the invention if the steel powder comprises V in an amount of at least 0.12 and/or 0.25 wt.-% or less, and preferably 0.15 wt.-% or more and/or 0.24 wt.-% or less.

In addition, it has been found that steel powders with a Cr content in about the middle third of the range of 2 to 14 wt.-% as indicated above provide for good mechanical characteristics. Accordingly, is it preferred that the steel powder of the invention has a Cr content of at least 5.2 and/or 8.0 wt.-% or less. Alternatively, and preferably in addition thereto, the steel powder comprises Ni in an amount of from 5.2 to 8.0 wt.-% as well.

In a particularly preferred embodiment, the steel in the inventive steel powder has a composition comprising 0.15 to 0.20 wt.-% of C, 5.5 to 7.0 wt.-% of Ni; 0.7 to 1.0 wt.-% of Mo, 2.2 to 2.5 wt.-% of Al; 5.5 to 7.0 wt.-% of Cr; 0.15 to less than 0.25 wt.-% of V; up to 0.01 wt.-% of Co; 0.15 to 0.4 wt.-% of Mn; up to 0.15 wt.-% of Si, up to 0.10 wt.-% of Cu up to 0.035 wt.-% of O and up to 0.01 wt.-% of S.

For the steel composition in the inventive steel powder, it is furthermore preferred that it comprises less than 0.01 wt.-% of Co, preferably 0.005 wt.-% or less of Co and more preferably 0.002 wt.-% or less of Co.

For the steel composition in the inventive steel powder, it is furthermore preferred that the amounts of Al and Ni are such that they fulfil the formula Al = (Ni/3)±0.5 in wt.-%, with the proviso that the amount of Al is 1 wt.-% if the formula results in an amount of Al lower than 1 wt.-% and that the amount of Al is 3 wt.-% if the formula results in an amount of Al of higher than 3 wt.-%.

The above steel compositions exhibit low distortion when processed via additive manufacturing techniques and in particular when processed by direct metal laser sintering or direct metal laser melting.

As noted above, the inventive steel powder has an average particle size ranging from 10 to 100 µm, which ensures that the particles are sufficiently large to enable an easy handling and processing of the particles and that the particles can be processed to a three-dimensional object with a sufficiently low surface roughness, which may not be the case for particles which are significantly larger than 100 µm. Preferably, the steel powder has an average particle size of 15 µm or more and in particular 20 µm or more and/or 80 µm or less and in particular 60 µm or less.

The respective particles in the steel powder can have any shape which is practical for use in additive manufacture, but in most cases the particles will have a rounded or round shape or even a substantially spherical shape. In the alternative, the particles can also have an irregular shape.

In a second aspect, the present application concerns a method for the preparation of a steel powder, as described above, where a steel having a composition as described above is molten and processed to a powder. A preferred means of powder processing in this case is atomization and in particular gas or plasma atomization.

In a third aspect, the present application concerns a method for the manufacture of a three-dimensional object, which comprises providing a steel powder as described in the first aspect above and preferably a steel powder, which is prepared according to the method as described in the second aspect, and preparing the object by applying the steel powder layer on layer and selectively consolidating the powder, in particular by application of particle (e.g. electron) or electromagnetic radiation, at positions in each layer, which correspond to the cross section of the object in this layer, wherein the positions are scanned in at least one interaction zone, in particular in a radiation interaction zone of an energy beam bundle.

Using this method, for example a three-dimensional object with reduced cracking compared to a corresponding three-dimensional object, which is prepared with a H13 steel powder, can be manufactured.

The three-dimensional object may be an object of a single material (i.e., a material resulting from the processing of the steel powder as described above) or an object of different materials. If the three-dimensional object is an object of different materials, this object can be produced, for example, by applying the steel powder of the invention, for example, to a base body or pre-form of the other material.

For the method of the third aspect, it is further preferred that the individual layers, which are subsequently subjected at least in part to treatment with particle (e.g. electron) or electromagnetic radiation, are applied at a thickness of 10 µm or more, preferably 20 µm or more and more preferably 30 µm or more. Alternatively or cumulatively, the layers are applied at a thickness of preferably 100 µm or less, more preferably 90 µm or less and even more preferably 85 µm or less. In a particularly preferred embodiment, the thickness, in which the layers are applied, is in the range of 30 to 50 µm. In another particularly preferred embodiment the thickness, in which the layers are applied, is in the range of 70 to 90 µm.

For the inventive method, it is further preferred that the powder mixture is processed with a heat input in the range of from 30 to 80 J/mm³ and preferably at least 40 J/mm³ or more and/or 60 J/mm³ or less. Here the heat input is calculated from the processing parameters as laser power/(laser speed^{∗}hatch distance^{∗}layer thickness).

The method of the third aspect can be suitably developed further in that the three-dimensional object after its preparation is subjected to ageing or tempering at a temperature of from 500 to 700°C. Ageing at this temperature ensures that possible alloyed carbides precipitate and increase the strength and hardness of the object by secondary hardening. Preferably, the ageing is performed at a temperature of 540°C or more and/or 650°C or less. The duration of the ageing treatment is regularly adjusted such that, precipitation of carbides can occur to the desired degree, but according to cost considerations should not be longer than required for this purpose. In this regard, the skilled person will understand that the ageing time will also depend on the ageing temperature. As a suitable ageing timeframe, a time of from 1,5 h to 8 h can be given, while it is preferred that the ageing is performed for a time of 2 h or more and/or 6 h or less.

An ageing and tempering in the above is intended to mean the same processing, i.e. holding a three-dimensional object at an elevated temperature for an indicated time without the application of stresses. However, the term "ageing" in the application will usually be used when the three-dimensional object is subjected to such treatment directly after its preparation, whereas tempering will usually be used if the three-dimensional object is subjected to a heat treatment after it has previously been subjected to ageing.

In a fourth aspect, the present invention concerns a three-dimensional object which is prepared by the method as herein indicated above, i.e. a method wherein the three-dimensional object is prepared by selective layer-wise solidification of the steel powder by means of an electromagnetic and/or particle radiation at positions that correspond to a cross-section of the object in a respective layer, wherein the steel powder is a steel powder for use in the manufacture of a three-dimensional object by means of an additive manufacturing method, wherein the steel powder has a composition as indicated in the first aspect. The three-dimensional object has, for example, a reduced likelihood of crack formation when compared to the same three-dimensional object, which is prepared with a H13 steel powder without the addition of a ceramic additive.

The three-dimensional object according to the invention in the fourth aspect is preferably a three-dimensional object, wherein the material of the three-dimensional object has an ultimate tensile strength of more than 1200 MPa and preferably at least 1300 MPa and/or 2100 MPa or less, and/or a yield strength of more than 1100 MPa and preferably at least 1200 MPa and/or 1850 MPa or less, and/or an elongation of at least 2% and preferably of at least 6.5% and/or 12% or less. In addition, or in alternative thereto, it is preferred that the material of the three-dimensional object has a hardness (according to Rockwell, ISO 6508-1 (2016)) ranging from 40 to 60 HRC and preferably of at least 42 HRC and/or 56 HRC or less.

In addition, it has been observed that the steel of the invention has good temper resistance, in that the hardness of the steel only shows little change when a test body is exposed to elevated temperature (e.g. 600°C) for prolonged periods of time. In a corresponding test, it has e.g. been observed that the hardness (measured as Rockwell HRC) declines by less than 1.0 units HRC per 1h tempering at 600°C within the time from 1h of tempering until 10h of tempering. Accordingly, it is preferred that the three-dimensional object exhibits an average decline in the Rockwell hardness of less than 1.2 units HRC per 1h tempering at 600°C within the time from 1h of tempering until 10h of tempering, more preferably wherein the Rockwell hardness does not decline by more than 1.0 units HRC per 1h tempering, and more preferably wherein the Rockwell hardness does not decline by more than 0.8 units HRC per 1h tempering.

For the three-dimensional objects of either of the above, it is preferred that they have a relative density of 98% or more, preferably 99% or more and more preferably 99.5% or more, wherein the relative density is defined as the ratio of the measured density and the theoretical density. The theoretical density is the density which can be calculated from the density of the bulk materials used to prepare the three-dimensional object (basically metal alloy particles) and their respective ratios in the three-dimensional object. The measured density is the density of the three-dimensional object as determined by the Archimedes Principle according to ISO 3369:2006.

For a three-dimensional object, which is prepared by additive manufacture and in particular by methods such as direct metal laser sintering or direct metal laser melting it is quite difficult to provide mechanical characteristics such as yield strength, ultimate tensile strength and elongation, which are identical in the vertical direction to the building plane and the horizontal direction to the building plane. Accordingly, in one embodiment, the inventive three-dimensional-object exhibits a yield strength in one direction which differs from the yield strength of the object in a direction perpendicular thereto by at least 0.5 %. In most cases, the difference will be in the range of 1% to no more than about 6%. The skilled practitioner here understands that it is generally aimed at providing as little difference in the mechanical properties between the vertical and horizontal direction of the building plane as possible.

As noted above, the inventive steel is particularly suitable for the production of hot or cold work tools. Thus, in a fifth further aspect, the present application concerns the use of the steel powder as described in the first aspect for the preparation of hot or cold work tools, and in particular for the preparation of die casting or injection molding tools.

In a sixth aspect, the present application concerns a use of a steel powder according to the above first aspect for suppressing the formation of cracks in the preparation of three-dimensional objects from steel. In this use, the steel powder is usually processed to a three-dimensional object by additive manufacture and in particular by direct metal laser sintering or direct metal laser melting without the addition of further constituents.

Finally, in a seventh aspect the present invention concerns a device for implementing a process as described above, wherein the device comprises an irradiation unit emitting electromagnetic or particle irradiation, preferably a laser sintering or laser melting device (20), a process chamber having (3) an open container (5) with a container wall (6), a support (10), which is inside the process chamber (3), wherein open container (5) and support (10) are moveable against each other in vertical direction, a storage container (14) and a recoater (16), which is moveable in horizontal direction, and wherein the storage container (14) is at least partially filled with a steel powder as described in the first aspect.

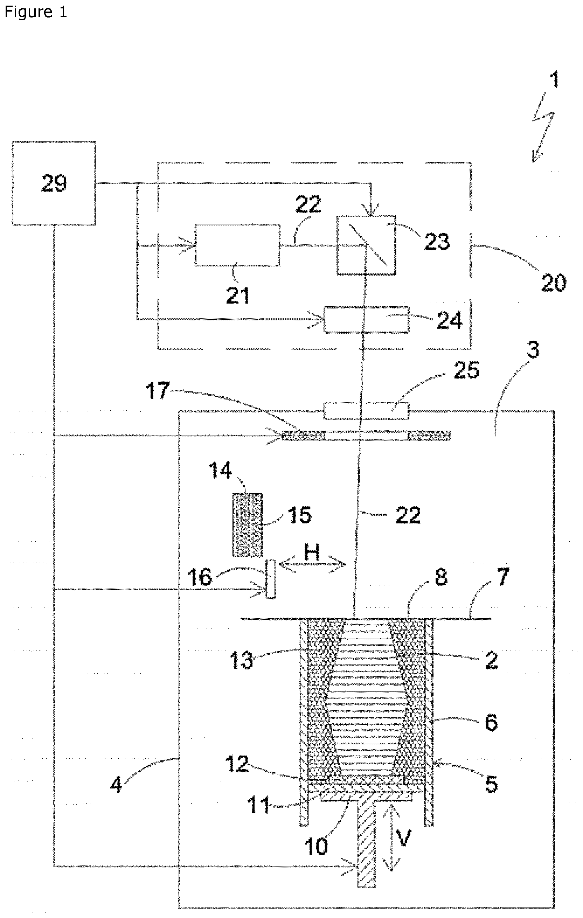

Other features and embodiments of the invention are provided in the following description of an exemplary embodiment taking account of the appended Figure 1.

The device represented in Figure 1 is a laser sintering or laser melting apparatus 1 for the manufacture of a three-dimensional object 2. The apparatus 1 contains a process chamber 3 having a chamber wall 4. A container 5 being open at the top and having a container wall 6 is arranged in the process chamber 3. The opening at the top of the container 5 defines a working plane 7. The portion of the working plane 7 lying within the opening of the container 5, which can be used for building up the object 2, is referred to as building area 8. Arranged in the container 5, there is a support 10, which can be moved in a vertical direction V, and on which a base plate 11 which closes the container 5 toward the bottom and therefore forms the base of the container 5 is attached. The base plate 11 may be a plate which is formed separately from the support 10 and is fastened on the support 10, or may be formed so as to be integral with the support 10. A building platform 12 on which the object 2 is built may also be attached to the base plate 11. However, the object 2 may also be built on the base plate 11, which then itself serves as the building platform.

In Figure 1, the object 2 to be manufactured is shown in an intermediate state. It consists of a plurality of solidified layers and is surrounded by building material 13 which remains unsolidified. The apparatus 1 furthermore contains a storage container 14 for building material 15 in powder form, which can be solidified by electromagnetic radiation, for example a laser, and/or particle radiation, for example an electron beam. The apparatus 1 also comprises a recoater 16, which is movable in a horizontal direction H, for applying layers of building material 15 within the building area 8. Optionally, a radiation heater 17 for heating the applied building material 15, e.g. an infrared heater, may be arranged in the process chamber.

The device in Figure 1 furthermore contains an irradiation device 20 having a laser 21, which generates a laser beam 22 that is deflected by means of a deflecting device 23 and focused onto the working plane 7 by means of a focusing device 24 via an entrance window 25, which is arranged at the top side of the process chamber 3 in the chamber wall 4.

The device in Figure 1 furthermore contains a control unit 29, by means of which the individual component parts of the apparatus 1 are controlled in a coordinated manner for carrying out a method for the manufacture of a three-dimensional object. The control unit 29 may contain a CPU, the operation of which is controlled by a computer program (software). During operation of the apparatus 1, the following steps are repeatedly carried out: For each layer, the support 10 is lowered by a height which preferably corresponds to the desired thickness of the layer of the building material 15. The recoater 16 is moved to the storage container 14, from which it receives an amount of building material 15 that is sufficient for the application of at least one layer. The recoater 16 is then moved over the building area 8 and applies a thin layer of the building material 15 in powder form on the base plate 11 or on the building platform 12 or on a previously applied layer. The layer is applied at least across the cross-section of the object 2, preferably across the entire building area 8. Optionally, the building material 15 is heated to an operation temperature by means of at least one radiation heater 17. The cross-section of the object 2 to be manufactured is then scanned by the laser beam 22 in order to selectively solidify this area of the applied layer. These steps are carried out until the object 2 is completed. The object 2 can then be removed from the container 5.

According to the invention, a steel powder is used as building material 15. The steel powder as a composition as described in the above first aspect.

According to the embodiments described below, the steel powder is e.g. processed by the direct metal laser sintering (DMLS) method. In the selective laser sintering or selective laser melting method small portions of a whole volume of powder required for manufacturing of an object are heated up simultaneously to a temperature which allows a sintering and/or melting of these portions. This way of manufacturing an object can typically be characterized as a continuous and/or - on a micro-level - frequently gradual process, whereby the object is acquired through a multitude of heating cycles of small powder volumes. Solidification of these small powder portions is carried through selectively, i.e. at selected positions of a powder reservoir, which positions correspond to portions of an object to be manufactured. As in selective laser sintering or selective laser melting the process of solidification is usually carried through layer by layer the solidified powder in each layer is identical with a cross-section of the object that is to be built. Due to the small volume or mass of powder which is solidified in a given time span, e.g. 1 mm³ per second or less, and due to conditions in a process chamber of such additive manufacturing machines, which can favor a rapid cooldown below a critical temperature, the material normally solidifies quickly after heating.

In conventional sintering and casting methods one and the same portion of building material is heated up to a required temperature at the same time. A whole portion of material required to generate an object is cast into a mould in a liquid form. This volume of building material is therefore held above a temperature level required for melting or sintering for a much longer time compared to the selective laser sintering or selective laser melting method. Large volumes of hot material lead to a low cooling rate and a slow solidification process of the building material after heating. In other words, selective laser sintering or selective laser melting methods can be differentiated from conventional sintering and casting methods by processing of smaller volumes of building material, faster heat cycles and less need for heating up build material with high tolerances for avoiding a premature solidification of the material. These can be counted among the reasons why the amount of energy introduced into the building material for reaching the required temperatures can be controlled more accurately in selective laser sintering or selective laser melting methods. These conditions allow for setting an upper limit of energy input into the powder portions to be processed, which determines a temperature generated in the powder portions, more precisely, that is lower and closer to the melting point of the respective material than in conventional sintering or casting methods.

In the following the present invention will be further described by means of some examples, which however are not be construed as limiting the invention thereto in any manner.

### Example 1

A steel powder with a particle size of 16 - 63 µm µm and the composition as shown in the below Table 1 was processed in an EOS M290 machine, and test specimen according to ISO 6892 were prepared with a layer thickness of 40 µm using a heat input of 58.8 J/mm³.

**Table 1**

| Element | Steel composition |
|---|---|
| C | 0.15 to 0.20 |
| Si | Up to 0.15 |
| O | Up to 0.035 |
| Mn | 0.15 to 0.40 |
| Cr | 5.50 to 7.00 |
| Ni | 5.50 to 7.00 |
| Mo | 0.70 to 1.00 |
| V | 0.15 to 0.25 |
| Al | 2.20 to 2.50 |
| S | Up to 0.010 |
| Cu | Up to 0.1 |
| Fe | balance |

The test specimens were subjected to ageing treatment at temperatures of 550°C, 570°C, 590°C and 625°C. Subsequently, the test specimens were then subjected to mechanical testing according to DIN EN ISO 6892-1 (2020). The results of these tests are provided in the following Table 2:

**Table 2:**

| Ageing temperature [°C] | 550 | | 570 | | 590 | | 625 | |
|---|---|---|---|---|---|---|---|---|
| | v¹ | h² | v¹ | h² | v¹ | h² | v¹ | h² |
| Yield strength [MPa] | 1750 | 1720 | 1800 | 1780 | 1660 | 1630 | 1320 | 1250 |
| Tensile strength [MPa] | 2050 | 2050 | 1915 | 1900 | 1750 | 1710 | 1400 | 1350 |
| Elongation [%] | 8 | 8.5 | 7 | 8 | 7.8 | 8.4 | 10 | 10 |
| Rockwell hardness³ [HRC] | 55 | | 53.5 | | 51 | | 43 | |

| | | | | | | | | |
|---|---|---|---|---|---|---|---|---|
| 1 = measured perpendicular to the building plane; 2 =measured horizontal to the building plane; 3 = determined according to ISO 6508-1 (2016) | | | | | | | | |

In the test specimens thus prepared no cracking was observed.

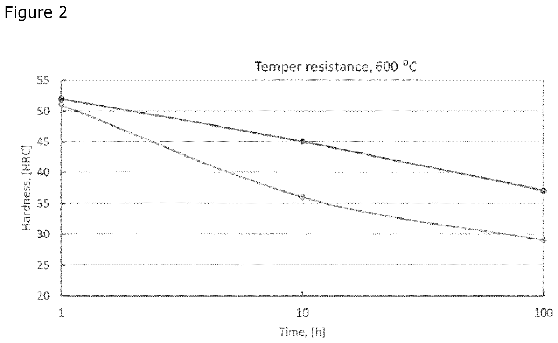

In a further test, the temper resistance of a series of test specimens having the steel composition as indicated in table 1 was investigated by subjecting the series to heat treatment at 600°C for 100h. After 1h, 10h and 100h respectively a test specimen was removed and the hardness of the specimen was determined. The results of the inventive samples (upper curve) are shown in Figure 2 relative to respective samples of a conventional H13 steel (lower curve).

## Claims

1. A steel powder for an additive manufacturing process, wherein the steel has the composition: 0.05 to 0.30 wt.-% of C, 3 to 9 wt.-% of Ni; 0.5 to 1.5 wt.-% of Mo, 1 to 3 wt.-% of Al; 2 to 14 wt.a steel powder with -% of Cr; 0.10 to 1.0 wt.-% of V; up to 0.03 wt.-% of Co; up to 0.5 wt.-% of Mn; up to 0.3 wt.-% of Si and up to 0.20 wt.-% of Cu; the remainder up to 100 % being Fe and impurity elements, wherein the powder has an average particle size of from 10 to 100 µm.

2. Steel powder according to claim 1, wherein the content of V in the steel is from 0.12 to less than 0.25 wt.-%, and preferably 0.15 wt.-% or more and/or 0.24 wt.-% or less.

3. Steel powder according to claim 1 or 2, wherein the steel comprises 5.2 to 8.0 wt.-% of Cr and preferably 5.2 to 8.0 wt.-% of Ni.

4. Steel powder according to any one of claims 1 to 3, wherein the steel comprises 0.15 to 0.20 wt.-% of C, 5.5 to 7.0 wt.-% of Ni; 0.7 to 1.0 wt.-% of Mo, 2.2 to 2.5 wt.-% of Al; 5.5 to 7.0 wt.-% of Cr; 0.15 to less than 0.25 wt.-% of V; up to 0.01 wt.-% of Co; 0.15 to 0.4 wt.-% of Mn; up to 0.15 wt.-% of Si, up to 0.10 wt.-% of Cu up to 0.035 wt.-% of O and 0.01 wt.-% of S.

5. Steel powder according to any one of the preceding claims, wherein the steel comprises 0.01 wt.-% or less of Co.

6. Steel powder according to any one of the preceding claims, wherein the amounts of Al and Ni are such that they fulfil the formula Al = (Ni/3)±0.5 in wt.-%, with the proviso that the amount of Al is 1 wt.-% if the formula results in an amount of Al lower than 1 wt.-% and that the amount of Al is 3 wt.-% if the formula results in an amount of Al of higher than 3 wt.-%.

7. Steel powder according to any one of the preceding claims, wherein the steel powder has an average particle size of 20 µm or more and/or 60 µm or less.

8. Method for the preparation of a steel powder according to any one of claims 1 to 7, wherein a steel according to the composition as described in claims 1 to 7 is molten and processed to a powder, preferably by gas or plasma atomization.

9. Method for the manufacture of a three-dimensional object comprising providing a steel powder as defined in any one of claims 1 to 7, preferably a steel powder prepared according to the method of claim 8, and preparing the object by applying the steel powder layer on layer and selectively consolidating the powder, in particular by application of electromagnetic radiation, at positions in each layer, which correspond to the cross section of the object in this layer, wherein the positions are scanned in at least one interaction zone, in particular in a radiation interaction zone of an energy beam bundle.

10. Method according to claim 9, wherein the individual layers are applied at a thickness of 10 µm or more, preferably 20 µm or more and more preferably 30 µm or more and/or 100 µm or less, preferably 90 µm or less and more preferably 85 µm or less.

11. Method according to claim 9 or 10, wherein the three-dimensional object after its preparation is subjected to ageing at a temperature of from 500 to 700°C, preferably at a temperature of 540°C or more and/or 650°C or less, wherein the ageing is preferably performed for a time of 2 to 6 h.

12. Three-dimensional object prepared according to the method of claims 9 to 11.

13. Use of a steel powder according to any one of claim 1 to 7 for the preparation of hot or cold work tools, in particular for the preparation of die casting or injection molding tools.

14. Use of a steel powder according to any one of claim 1 to 7 for suppressing the formation of cracks in the preparation of three-dimensional objects from steel.

15. Device for implementing a method according to claim 8 to 10, wherein the device comprises an irradiation unit emitting electromagnetic or particle irradiation, preferably a laser sintering or laser melting device (20), a process chamber having (3) an open container (5) with a container wall (6), a support (10), which is inside the process chamber (3), wherein open container (5) and support (10) are moveable against each other in vertical direction, a storage container (14) and a recoater (16), which is moveable in horizontal direction, and wherein the storage container (14) is at least partially filled with a steel powder according to any one of claims 1 to 7.
